# EUROPÄISCHE PATENTANMELDUNG

(11) **EP 1 304 187 A1**
(43) Veröffentlichungstag der Anmeldung: **23.04.2003**
(21) Anmeldenummer: 01124732.7
(22) Anmeldetag: 17.10.2001
(51) Int. Cl.: B23P 19/04, B23P 21/00, B23Q 5/28, B23Q 1/00

(54) **Arbeitsstation für eine Montagemaschine**

(71) Anmelder: AKB Automationskomponenten und Basismaschinen GmbH & Co.KG, 37308 Heiligenstadt (DE)
(72) Erfinder:
(74) Vertreter: Albrecht, Rainer Harald, Dr.-Ing.

(57) **Zusammenfassung**

Die Erfindung betrifft eine Arbeitsstation für eine Montagemaschine mit mindestens einer Handhabungsvorrichtung (1), die ein mechanisches Stellelement (2) aufweist, einem Antrieb (3) zur Steuerung der Handhabungsvorrichtung, einer an einem Druckspeicher (4) angeschlossenen Luftfeder (5) und einem flexiblen Zug/Druck-Betätigungselement (6), das den Antrieb (3) mit dem Stellelement (2) der Handhabungsvorrichtung (1) verbindet. Das Stellelement (2) der Handhabungsvorrichtung (1) ist von dem Zug/Druck-Betätigungselement (6) in Zugrichtung und in entgegengesetzter Wirkungsrichtung von der Luftfeder (5) beaufschlagt. Erfindungsgemäß ist der Antrieb (3) als elektrischer Linearmotor ausgebildet. Das Zug/Druck-Betätigungselement (6) ist an das von einem Wanderfeld bewegte Element des Linearmotors (3) angeschlossen.

## Beschreibung

Die Erfindung betrifft eine Arbeitsstation für eine Montagemaschine mit
mindestens einer Handhabungsvorrichtung, die ein mechanisches Stellelement aufweist,
einem Antrieb zur Steuerung der Handhabungsvorrichtung,
einer an einen Druckspeicher angeschlossenen Luftfeder und
einem flexiblen Zug/Druck-Betätigungselement, das den Antrieb mit dem Stellelement der Handhabungsvorrichtung verbindet,
wobei das Stellelement von dem Zug/Druck-Betätigungselement in Zugrichtung und in entgegengesetzter Wirkungsrichtung von der Luftfeder beaufschlagt ist.

Aus DE 196 03 253 ist eine Montagemaschine mit einer Transfereinrichtung und einem zentralen Antrieb für die Transfereinrichtung sowie für die Handhabungsvorrichtungen der entlang der Transfereinrichtung angeordneten Arbeitsstationen bekannt. Der Zentralantrieb weist eine von einem Rast/Schritt-Getriebe angetriebene Steuerwelle mit Kurvenscheiben auf. Die Zug/Druck-Betätigungselemente werden von den Steuerkonturen der Kurvenscheiben betätigt. Der kurvengesteuerte Zentralantrieb arbeitet zuverlässig.

Nachteilig ist, dass bei einer Umstellung auf andere Montageaufgaben die Kurvenscheiben ausgewechselt sowie Kurvenscheiben mit an die Montageaufgabe angepassten Steuerkonturen mechanisch hergestellt werden müssen. Eine Umrüstung ist daher verhältnismäßig aufwendig.

Ferner sind Handhabungsvorrichtungen mit elektromechanischen Antrieben bekannt. Sie weisen einen Spindelantrieb mit zugeordnetem Elektromotor auf. Durch den Elektromotor baut die Handhabungsvorrichtung groß. Ferner sind den Arbeitsgeschwindigkeiten des Spindelantriebes Grenzen gesetzt.

Schließlich sind Handhabungsvorrichtungen mit integrierten elektrischen Linearantrieben vorgeschlagen worden. Wicklungen, die ein Wanderfeld erzeugen, sind in die Handhabungsvorrichtungen eingebaut. Aufgrund der hohen Beschleunigungen, die realisiert werden müssen, ist die elektrische Verlustleistung erheblich. Die Handhabungsvorrichtungen müssen daher mit großen Kühlflächen versehen werden, so dass ein kompakter Aufbau der Handhabungsvorrichtungen nicht möglich ist.

Der Erfindung liegt die Aufgabe zugrunde, die Arbeitsstation für eine Montagemaschine so auszubilden, dass die Steuerbewegungen der Handhabungsvorrichtung flexibel durch Änderung der Steuersoftware an die Montageaufgaben angepasst werden kann. Dabei soll ein konstruktiv einfacher und kompakter Aufbau der Handhabungsvorrichtung gewährleistet sein.

Ausgehend von einer Arbeitsstation des eingangs beschriebenen Aufbaues wird die Aufgabe erfindungsgemäß dadurch gelöst, dass der Antrieb als elektrischer Linearmotor ausgebildet ist und dass das Zug/Druck-Betätigungselement an das von einem Wanderfeld bewegte Element des Linearmotors angeschlossen ist. Da die Stellbewegungen des Linearmotors über das flexible Zug/Druck-Betätigungselement auf das Stellelement der zugeordneten Handhabungsvorrichtung übertragen wird, kann der Antrieb mit Abstand zur Arbeitsstation in einem Gestell der Montagemaschine angeordnet werden. Dort steht ausreichender Platz zur Unterbringung des Antriebes zur Verfügung, so dass der Linearmotor beliebig groß und mit einem ausreichend dimensionierten Kühler zur Abfuhr der elektrischen Verlustleistung ausgebildet werden kann. Ferner besteht die Möglichkeit, die Linearmotoren mehrerer Arbeitsstationen in Form einer kompakten Baugruppe in beliebiger Anzahl aneinander zu reihen. Der Linearmotor kann an eine übliche speicherprogrammierbare Steuerung angeschlossen werden.

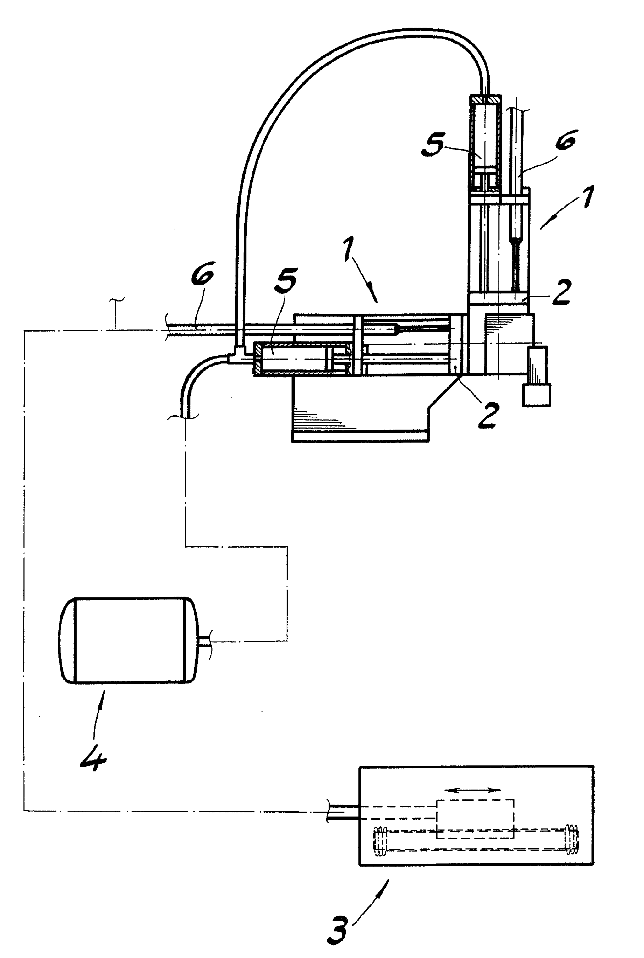

Die einzige Figur zeigt schematisch den Aufbau einer Arbeitsstation für eine Montagemaschine, die beispielsweise als Rundtaktautomat ausgebildet sein kann. Zum grundsätzlichen Aufbau der Arbeitsstation gehören mindestens eine Handhabungsvorrichtung 1 mit einem mechanischen Stellelement 2, ein Antrieb 3 zur Steuerung der Handhabungsvorrichtung 1, eine an einen Druckspeicher 4 angeschlossene Luftfeder 5 und ein flexibles Zug/Druck-Betätigungselement 6, das den Antrieb 3 mit dem Stellelement 2 der Handhabungsvorrichtung 1 verbindet. Das Stellelement 2 ist von dem Zug/Druck-Betätigungselement 6 in Zugrichtung und in entgegengesetzter Wirkungsrichtung von der Luftfeder 5 beaufschlagt.

Die Luftfeder 5 gehört einem geschlossenen, pneumatischen System an. Die Anordnung ist so getroffen, dass die Luftfeder 5 bei arbeitender Montagemaschine permanent mit konstantem Druck aus dem Druckspeicher 4 beaufschlagt wird. Der Druck in dem pneumatischen System kann für die Durchführung von unterschiedlichen Montagearbeiten unterschiedlich hoch eingestellt werden.

Der Antrieb 3 ist als elektrischer Linearmotor ausgebildet und mit Abstand zur Arbeitsstation in einem Gestell der Montagemaschine angeordnet. Er weist ausreichend dimensionierte Kühler zur Abfuhr der elektrischen Verlustleistung auf. Das Zug/Druck-Betätigungselement 6 ist an das von einem Wanderfeld bewegte Element des Linearmotors 3 angeschlossen.

## Patentansprüche

1. Arbeitsstation für eine Montagemaschine mit
mindestens einer Handhabungsvorrichtung (1), die ein mechanisches Stellelement (2) aufweist,
einem Antrieb (3) zur Steuerung der Handhabungsvorrichtung (1),
einer an einen Druckspeicher (4) angeschlossenen Luftfeder (5) und
einem flexiblen Zug/Druck-Betätigungselement (6), das den Antrieb (3) mit dem Stellelement (2) der Handhabungsvorrichtung (1) verbindet,
wobei das Stellelement (2) von dem Zug/Druck-Betätigungselement (6) in Zugrichtung und in entgegengesetzter Wirkungsrichtung von der Luftfeder (5) beaufschlagt ist, **dadurch gekennzeichnet, dass** der Antrieb (3) als elektrischer Linearmotor ausgebildet ist und dass das Zug/Druck-Betätigungselement (6) an das von einem Wanderfeld bewegte Element des Linearmotors (3) angeschlossen ist.

2. Arbeitsstation nach Anspruch 1, **dadurch gekennzeichnet, dass** der Antrieb (3) mit Abstand zur Arbeitsstation in einem Gestell der Montagemaschine angeordnet ist.

3. Arbeitsstation nach Anspruch 1 oder 2, **dadurch gekennzeichnet, dass** der Antrieb (3) einen Kühler zur Abfuhr der elektrischen Verlustleistung aufweist.
